# EUROPEAN PATENT APPLICATION

(11) **EP 4 803 282 A1**
(43) Date of publication of application: **09.09.2026**
(21) Application number: 23957707.5
(22) Date of filing: 02.11.2023
(51) Int. Cl.: B29C 44/00, B29C 44/42, B29C 45/04

(54) **MOLDED COMPONENT AND METHOD FOR PRODUCING MOLDED COMPONENT**

(71) Applicant: Maxell, Ltd., Kyoto 618-8525 (JP)
(72) Inventor: UEDA, Naofumi, Otokuni-gun, Kyoto 618-8525 (JP); YUSA, Atsushi, Otokuni-gun, Kyoto 618-8525 (JP); NOSE, Manabu, Otokuni-gun, Kyoto 618-8525 (JP); YAMAMOTO, Satoshi, Otokuni-gun, Kyoto 618-8525 (JP); HARADA, Yujiro, Otokuni-gun, Kyoto 618-8525 (JP)
(74) Representative: Mewburn Ellis LLP
(86) International application number: PCT/JP2023/039703
(87) International publication number: WO 2025/094382

(57) **Abstract**

A molded part is provided that is light-weight and, at the same time, provides improved strength and appearance. A molded part (10) is a molded part made from a thermoplastic resin, including: a base (11) with an average thickness t of 0.5 to 3.0 mm; and a plurality of ribs (121-123) protruding from one face (11a) of the base (11) in the thickness direction of the base (11), the flatness of a face (11b) of the base (11) being not more than 15 µm, the width of the root of each of the ribs (121-123) being 1.0 to 4.0 times the average thickness t of the base (11), the proportion of foam cells in the base (11) being 0 to 5 %, the proportion of foam cells in each of the ribs (121-123) being 0 to 90 %, at least one of the ribs (121-123) having foam cells, the difference between the maximum and minimum values of the proportion of foam cells among the ribs (121-123) being not more than 35 %.

## Description

### TECHNICAL FIELD

The present invention relates to a molded part and a method of manufacturing a molded part, and, more particularly, to a molded part made from a thermoplastic resin and a method of manufacturing such a molded part.

### BACKGROUND ART

The strength of molded parts is usually enhanced by forming ribs on the rear face of the substrate for reinforcement. However, during injection molding, molten resin does not easily flow into the rib areas, and filling pressure does not easily reach the distal ends of the ribs. This may result in sink marks (i.e., recesses) on the face opposite to that with the ribs, the sink marks following the rib shapes. This problem is more pronounced with molded parts with large surface area or with small wall thickness. While reducing the rib height or width may make the sink marks less noticeable, their reinforcement effect will then be less significant.

Such sink marks may be reduced by foam molding. JP 2013-6396 A discloses a method of forming a resin-molded product involving filling the cavity formed between a movable mold portion and a fixed mold portion with a resin material to form a resin-molded product provided with ribs on the rear face of the substrate. A feature of this molding method is to fill the cavity with a resin material, to which a blowing agent has been added, in a molten state, and then, while holding the movable mold portion in position and keeping the interior of the cavity approximately at atmospheric pressure, cooling the molten resin to form a resin-molded product.

JP 2001-322145 A discloses a panel-shaped foam-molded product of thermoplastic resin including a substrate and projections provided on the substrate. A feature of this panel-shaped foam-molded product of thermoplastic resin is that the average expansion ratio of the projections is not higher than 1.1 and the average expansion ratio of the substrate is not lower than 1.3.

JP 2010-36494 A discloses a resin-molded product forming at least a portion of a housing. This resin-molded product is constituted by a foam molding of thermoplastic resin formed with an expansion ratio not lower than 1.05 and not higher than 2.0, and includes a substrate with a plate thickness not smaller than 0.5 mm and not larger than 2.0 mm and ribs on one surface of the substrate, where each rib has a height not smaller than 2.0 mm and not larger than 10.0 mm from the root located on the surface, where the total projected area of the ribs onto the surface is not smaller than 2.5 % and not larger than 20.0 % of the total area of the surface.

One method of improving surface properties of a molded part made by foam molding is the counter-pressure method. The counter-pressure method involves filling a mold with pressurized gas before filling it with molten resin, thereby preventing a type of deterioration in appearance called "swirl marks".

JP H8-336852 A discloses a method of manufacturing a foam-molded product of synthetic resin having non-foamed portions. A feature of this manufacturing method is that, in a gas counter-pressure molding method, a portion of a foamable synthetic resin composition extruded into the cavity in the mold is cured to such a degree that it does not foam even when the pressure inside the cavity in the mold is reduced, and then the remaining portion of the foamable synthetic resin composition is foamed by reducing the pressure inside the cavity in the mold.

JP 2004-34381 A discloses a method of foaming-injection-molding a molded product with different thicknesses including a thin-wall portion and a thick-wall portion. This foaming-injection-molding method uses a mold including a first mold cavity corresponding to the molded product with different thicknesses and a second mold cavity connected to the first mold cavity and injecting a foamable molten resin into the first mold cavity, the molten resin containing a physical blowing agent dissolved therein. At this time, at least the first mold cavity is pressurized by gas at not lower than a pressure at which foaming does not occur in the flow front of the molten resin; during or after injection of the molten resin into the first mold cavity, some of the molten resin is discharged into the second mold cavity to foam only the thick-wall portion of the molded product with different thicknesses molded in the first mold cavity.

### PRIOR ART DOCUMENTS

### PATENT DOCUMENTS

Patent Document 1: JP 2013-6396 A
Patent Document 2: JP 2001-322145 A
Patent Document 3: JP 2010-36494 A
Patent Document 4: JP H8-336852 A
Patent Document 5: JP 2004-34381 A

### SUMMARY OF THE INVENTION

### PROBLEMS TO BE SOLVED BY THE INVENTION

An object of the present invention is to provide a molded part that is light-weight and, at the same time, provides improved strength and appearance.

### MEANS FOR SOLVING THE PROBLEMS

A molded part according to one embodiment of the present invention is a molded part made from a thermoplastic resin, including: a base with an average thickness *t* of 0.5 to 3.0 mm; and a plurality of ribs protruding from one face of the base in a thickness direction of the base, a flatness of a face of the base opposite to the face provided with the plurality of ribs being not more than 15 µm, a width of a root of each of the plurality of ribs being 1.0 to 4.0 times the average thickness *t* of the base, a proportion of foam cells in the base being 0 to 5 %, a proportion of foam cells in each of the plurality of ribs being 0 to 90 %, at least one of the plurality of ribs having foam cells, a difference between a maximum value and a minimum value of the proportions of foam cells among the plurality of ribs being not more than 35 %.

A method of manufacturing a molded part according to one embodiment of the present invention is a method of manufacturing the above-described molded part using a mold including a fixed mold portion and a movable mold portion and including a cavity corresponding to the base and a plurality of rib-forming portions corresponding to the plurality of ribs, including: introducing gas for counter-pressure into the mold; injection-molding a molten resin containing a blowing agent into the mold; initiating discharge of the gas for counter-pressure before completion of pressure keeping; moving the movable mold portion in a direction for increasing a distance from the fixed mold portion; and, after the movable mold portion has been moved in the direction for increasing the distance from the fixed mold portion, moving the movable mold portion in a direction for reducing the distance from the fixed mold portion.

A method of manufacturing a molded part according to one embodiment of the present invention is a method of manufacturing the above-described molded part using a mold including a fixed mold portion and a movable mold portion and including a cavity corresponding to the base and a plurality of rib-forming portions corresponding to the plurality of ribs, including: introducing gas for counter-pressure into the mold; injection-molding a molten resin containing a blowing agent into the mold; and initiating discharge of the gas for counter-pressure before completion of pressure keeping.

### EFFECTS OF THE INVENTION

The present invention provides a molded part that is light-weight and, at the same time, provides improved strength and appearance.

### BRIEF DESCRIPTION OF THE DRAWINGS

[FIG. 1] FIG. 1 is a schematic cross-sectional view of a construction of a molded part according to a first embodiment of the present invention.
[FIG. 2] FIG. 2 is a schematic cross-sectional view of a construction of an exemplary mold used to manufacture the molded part of FIG. 1.
[FIG. 3] FIG. 3 schematically illustrates an implementation where injection molding is performed using the mold of FIG. 2.
[FIG. 4] FIG. 4 schematically illustrates the implementation where injection molding is performed using the mold of FIG. 2.
[FIG. 5] FIG. 5 schematically illustrates the implementation where injection molding is performed using the mold of FIG. 2.
[FIG. 6] FIG. 6 is a schematic cross-sectional view illustrating how foaming occurs if the core-back step (FIG. 4) is not performed.
[FIG. 7] FIG. 7 is a schematic cross-sectional view of a construction of a molded part according to a second embodiment of the present invention.
[FIG. 8] FIG. 8 is a schematic cross-sectional view of a construction of an exemplary mold used to manufacture the molded part of FIG. 7.
[FIG. 9] FIG. 9 is a schematic cross-sectional view of a construction of a molded part according to a third embodiment of the present invention.
[FIG. 10] FIG. 10 is a schematic cross-sectional view of a construction of an exemplary mold used to manufacture the molded part of FIG. 9.
[FIG. 11] FIG. 11 is a schematic cross-sectional view of a construction of a molded part according to a third embodiment of the present invention.
[FIG. 12] FIG. 12 is a perspective view of the molded part of FIG. 11.
[FIG. 13] FIG. 13 is a schematic cross-sectional view of a construction of an exemplary mold used to manufacture the molded part of FIG. 11.
[FIG. 14] FIG. 14 schematically illustrates an implementation where injection molding is performed using the mold of FIG. 13.
[FIG. 15] FIG. 15 is a schematic cross-sectional view of a construction of another exemplary mold used to manufacture the molded part of FIG. 11.
[FIG. 16] FIG. 16 schematically illustrates an implementation where injection molding is performed using the mold of FIG. 15.
[FIG. 17] FIG. 17 schematically illustrates the implementation where injection molding is performed using the mold of FIG. 15.
[FIG. 18] FIG. 18 schematically illustrates the implementation where injection molding is performed using the mold of FIG. 15.
[FIG. 19] FIG. 19 is a schematic perspective view of a construction of a molded part produced for an example.
[FIG. 20] FIG. 20 schematically illustrates a bend test conducted for examples.

### EMBODIMENTS FOR CARRYING OUT THE INVENTION

Now, embodiments of the present invention will be described in detail with reference to the drawings. The same or corresponding elements in the drawings are labeled with the same reference signs, and their description will not be repeated. The size ratios of elements shown in the drawings do not necessarily show their actual size ratios.

### [First Embodiment]

### [Molded Part]

### (Shape and other features)

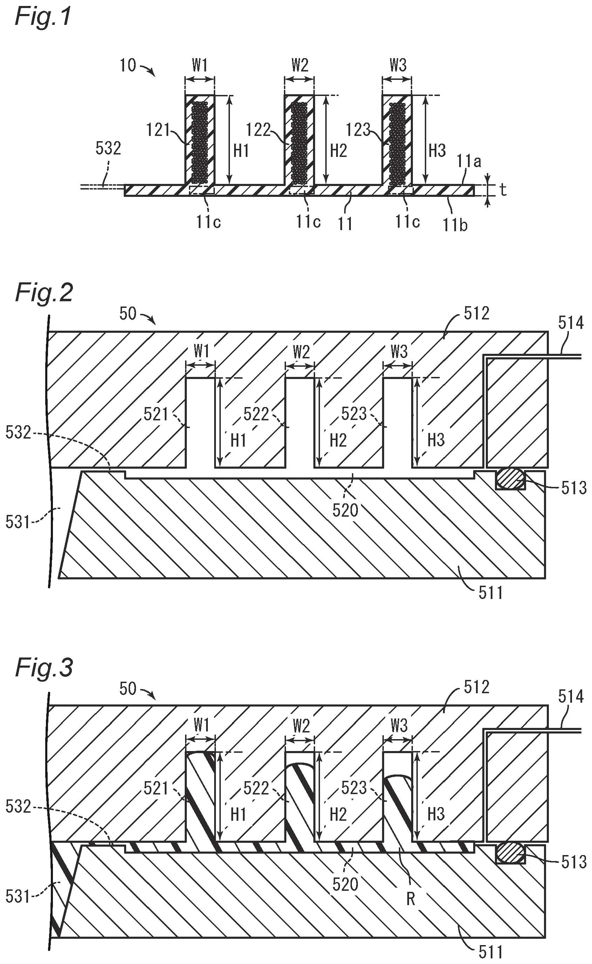

FIG. 1 is a schematic cross-sectional view of a construction of a molded part 10 according to a first embodiment of the present invention. The molded part 10 is a molded part made from a thermoplastic resin that includes a base 11 and ribs 121, 122 and 123.

The base 11 has a shape that expands in directions perpendicular to its thickness direction. Although FIG. 1 shows an implementation where the base 11 has a shape of a flat plate, the base 11 may have any shape with an average thickness t within a predetermined range. For example, the base 11 may have a three-dimensional shape including steps, for example, in in-plane directions, or may have a shape including a curved surface.

The average thickness *t* of the base 11 is 0.5 to 3.0 mm. If the average thickness *t* is too small, this will make it difficult to ensure strength and/or fill the mold with molten resin during molding. On the other hand, if the average thickness *t* is too large, this will make it difficult to reduce the proportion of foam cells, discussed further below. A lower limit of average thickness *t* is preferably 1.0 mm, and an upper limit of average thickness *t* is preferably 2.0 mm.

The ribs 121, 122 and 123 separately protrude from one surface 11a of the base 11 in the thickness direction of the base 11. Although FIG. 1 shows an implementation where the molded part 10 includes three ribs (ribs 121, 122 and 123), the molded part may include any number of ribs greater than 1. Expressions such as "ribs 121, 122 and 123" in the description of the present embodiment may be hereinafter generally referred to as "a plurality of ribs".

Further, although the ribs 121, 122 and 123 each have a rectangular cross-sectional shape in FIG. 1, the cross-sectional shape of the ribs may be other than a rectangle. For example, the cross-sectional shape of the ribs 121, 122 and 123 may be a trapezoid. While the cross-sectional shape of the ribs 121, 122 and 123 may have other shapes than a rectangle and a trapezoid, the cross-sectional shape of the ribs is preferably a rectangle or trapezoid to facilitate filling of molten resin.

Each of the widths *W1*, *W2* and *W3* of the roots of the ribs 121, 122 and 123 is 1.0 to 4.0 times the average thickness *t* of the base 11. As used herein, "width of the root" of a rib is a dimension of the rib as measured at a location adjacent to the base 11 and, if the rib is shaped to extend in one direction as seen in plan view (i.e., as seen when looking at the molded part 10 in the thickness direction of the base 11; the same applies hereinafter) (namely, if the rib has short sides and long sides as seen in plan view), as measured in a direction perpendicular to the direction in which the rib extends as seen in plan view. In other words, "width of the root" of a rib is a dimension of the rib at a location adjacent to the base 11 as measured in the short-side direction of the rib as seen in plan view. If the ribs are columnar in shape, "width of the root" of a rib is defined as its diameter.

If the width of the roots of the ribs (i.e., width of the root of each of the ribs 121, 122 and 123; the same applies hereinafter) is too small, this will make it difficult to foam the rib, making it difficult to increase the proportion of foam cells discussed further below. On the other hand, if the width of the roots of the ribs is too large, this will lead to increased weight of the molded part 10. A lower limit of each of the widths *W1, W2* and *W3* of the roots is preferably 1.2 times the average thickness *t* of the base 11. An upper limit of each of the widths *W1, W2* and *W3* of the roots is preferably 3.0 times the average thickness *t* of the base 11.

It is preferable that each of the ribs 121, 122 and 123 has a height that is 1.0 to 4.0 times the width (i.e., width of the root; the same applies hereinafter), and is 2.0 to 10.0 mm. In other words, it is preferable that the height *H1* of the rib 121 is 1.0 to 4.0 times the width *W1* and is 2.0 to 10.0 mm; similarly, it is preferable that the height *H2* of the rib 122 is 1.0 to 4.0 times the width *W2* and is 2.0 to 10.0 mm; and it is preferable that the height *H3* of the rib 123 is 1.0 to 4.0 times the width *W3* and is 2.0 to 10.0 mm. As used herein, "height" of a rib is the distance from the surface 11a of the base 11 to the apex of the rib as measured in the thickness direction of the base 11.

If the height of the ribs (i.e., the height of each of the ribs 121, 122 and 123; the same applies hereinafter) is too small, the strength-improvement effect of the ribs will be less significant. On the other hand, if the height of the ribs is too large, this will require a longer period of time for cooling during molding, leading to lower productivity. A lower limit of the height of the ribs is more preferably 1.5 times the width. An upper limit of the height of the ribs is more preferably 3.5 times the width.

The flatness of the surface 11b of the base 11 (i.e., surface opposite to the surface provided with the plurality of ribs (i.e., surface 11a)) is not more than 15 µm. Even in implementations where a larger number of ribs are provided on a thin-wall, larger-area base 11, the molded part 10 preferably does not develop visually observable sink marks (i.e., recesses) on the surface 11b. "Flatness of the surface 11b" means the maximum depth of recesses as measured from an imaginary plane (i.e., reference plane) extending from the base 11. "Flatness of the surface 11b" may be measured by a stylus-type step gauge, an optical shape-measuring machine or a microscope, for example. The flatness of the surface 11b is preferably not more than 10 µm, and more preferably not more than 5 µm.

### (Proportion of foam cells)

In the molded part 10 according to the present embodiment, the proportion of foam cells in the base 11, *X*, is 0 to 5 %, and each of the proportions of foam cells in the ribs 121, 122 and 123, denoted as *Y1*, *Y2* and *Y3*, respectively, is 0 to 90 %. Notwithstanding, at least one of the ribs 121, 122 and 123 includes foam cells.

"Proportion of foam cells" means the area ratio of foam cells in a two-dimensional image of a cross section of the molded part 10 (i.e., cross section parallel to the thickness direction of the base 11). The proportion of foam cells may be determined by observing a cross section using an SEM or optical microscope and then performing image analysis.

According to the present embodiment, it is preferable to reduce the proportion *X* of foam cells in the base 11 and increase the proportions *Y1*, *Y2* and *Y3* of foam cells in the ribs 121, 122 and 123. This will improve the strength, appearance and productivity of the molded part 10. In other words, reducing the proportion *X* of foam cells in the base 11 will ensure the required strength and provide sufficient filling performance of the resin during molding. Increasing the proportions *Y1*, *Y2* and *Y3* of foam cells in the ribs 121, 122 and 123 will reduce the weight of the ribs and, at the same time, prevent sink marks directly below the ribs, thereby improving the appearance of the molded part 10.

The proportion of foam cells in the base 11 is to be measured in an image of a field of 500 µm by 500 µm, the center of the field being represented by the middle (i.e., center in the thickness direction of the base 11 and center in the width direction of the rib) of a portion directly below the associated rib (i.e., portion indicated by the two-point-chain line 11c in FIG. 1).

An upper limit of the proportion *X* of foam cells in the base 11 is preferably 4 %, and more preferably 3 %.

The proportion of foam cells in a rib is to be determined by measurements in the center of the rib as determined along the width direction at three locations, not including the portion directly below the rib (i.e., portion indicated by the two-point-chain line 11c in FIG. 1), i.e., near the root of the rib, near the center of the rib as determined along the height direction, and near the distal end of the rib (excluding the skin layer), each represented by a field of 500 µm by 500 µm, and calculating the average. Further, the "proportion of foam cells in the ribs" is to be determined for each of the plurality of ribs (i.e., ribs 121, 122 and 123). According to the present embodiment, each of the proportions *Y1*, *Y2* and *Y3* of foam cells in the ribs 121, 122 and 123 is to be 0 to 90 %. Notwithstanding, at least one of the ribs 121, 122 and 123 includes foam cells. In other words, at least one of the proportions *Y1*, *Y2* and *Y3* of foam cells in the ribs 121, 122 and 123 is not zero. At least one of the proportions *Y1*, *Y2* and *Y3* of foam cells in the ribs 121, 122 and 123 is preferably not lower than 5 %, and more preferably not lower than 10 %.

Higher proportions of foam cells in the ribs (i.e., proportion of foam cells in each of the ribs 121, 122 and 123; the same applies hereinafter) enable reducing the weight of the ribs and preventing sink marks (it should be noted here that sink marks are less likely to be produced at locations near the gate 532, discussed further below, which means that ribs located near the gate 532, even if they have low proportions of foam cells, may cause fewer sink marks. Ribs located far from the gate 532 preferably have high proportions of foam cells). On the other hand, if the proportion of foam cells in the ribs is too high, this may make it difficult to control the proportion of foam cells across the entire molded part 10 in a stable manner. It may also require a complicated mold structure. A lower limit of the proportion of foam cells in the ribs is preferably 10 %, more preferably 20 %, and yet more preferably 30 %. An upper limit of the proportion of foam cells in the ribs is preferably 80 %, and more preferably 70 %.

The finer the foam cells, the better. The average diameter of foam cells in the ribs is preferably not larger than 1000 µm. The average diameter of foam cells in the ribs is more preferably not larger than 500 µm, and yet more preferably not larger than 300 µm.

In the molded part 10, the difference between the maximum and minimum values of the proportion of foam cells among the plurality of ribs is not more than 35 %. More specifically, the difference between the maximum value of the proportions *Y1*, *Y2* and *Y3* and the minimum value of the proportions *Y1*, *Y2* and *Y3* is not more than 35 %. "Not more than 35 %" here does not mean "not more than 35 % of some reference value", but means that the difference (in %) between the maximum value (in %) of the proportions *Y1*, *Y2* and *Y3* and the minimum value (in %) of the proportions *Y1*, *Y2* and *Y3* is not more than 35. For example, if the proportion *Y1* is 40 %, the proportion *Y2* is 45 % and the proportion *Y3* is 50 %, the "difference between the maximum and minimum values of the proportion of foam cells in the plurality of ribs" is *Y3* - *Y1* = 50 % - 40 % = 10 %.

If the difference between the maximum and minimum values of the proportion of foam cells among the plurality of ribs is too large, this will deteriorate the weight balance of the molded part 10. An upper limit of the difference between the maximum and minimum values of the proportion of foam cells among the plurality of ribs is preferably 25 %, more preferably 20 %, yet more preferably 15 %, still more preferably 12 %, and yet more preferably 10 %.

### (Material and other features of molded part 10)

The base 11, as well as the ribs 121, 122 and 123, are composed of the same thermoplastic resin. The thermoplastic resin forming the base 11 as well as ribs 121, 122 and 123 may be an amorphous resin or a crystalline resin. Such a resin may contain fillers such as talc or glass fibers, or pigments, for example.

Examples of amorphous resins include polycarbonate (PC), acrylonitrile-butadiene-styrene copolymer (ABS), and polymer alloys of PC and ABS. Amorphous resins allow the counter-pressure method discussed further below to produce high appearance-improvement effect, yielding a glossy, high-quality appearance similar to solid products even after foam molding. On the other hand, amorphous resins have low melt tension; thus, the proportion of foam cells in the ribs tends to be lower than in implementations where crystalline resins are used.

Examples of crystalline resins include polypropylene (PP), polyethylene (PE), high-density polyethylene (HDPE), and polyamide (PA). Crystalline resins have high melt tension, which enables further increasing the proportion of foam cells in the ribs when combined with fillers, for example. Furthermore, their high flowability facilitates production of a large and thin-wall molded part 10.

The surface 11b of the base 11 (i.e., surface opposite to the surface provided with the ribs 121 and other elements (i.e., surface 11a)) may be a mirror surface. Specifically, the surface roughness *Ra* of the surface 11b may be 10 to 500 nm. The surface roughness *Ra* of the surface 11b is preferably 10 to 200 nm. The surface roughness *Ra* may be measured using a laser microscope, an atomic-force microscope or a contact-type step gauge, for example.

### (Plating film)

Although not shown in FIG. 1, the molded part 10 may further include a plating film provided on the surface. Providing a plating film on the surface will improve design quality and, at the same time, improve the strength of the molded part 10, e.g., in flexural modulus. The surface roughness Ra of the plating film may be 10 to 500 nm, for example.

The plating film may be provided on a surface that has been roughened by chemical etching or blasting, for example. Providing a plating film on a roughened surface will improve the adhesion of the plating film.

The molded part 10 may include a mixture layer at the interface between the substrate (e.g., base 11 and ribs 121; the same applies hereinafter), on the one hand, and the plating layer, on the other, the mixture layer being a region with resin of the substrate and metal of the plating film mixed together. Providing a mixture layer, too, will improve the adhesion of the plating film. Such a mixture layer may be produced by, for example, causing the resin to swell using an acid, for example, and then performing electroless plating.

Although the plating film may cover only part of the surface of the substrate, covering the entire surface of the substrate with a plating film has the effect of shielding the substrate from entrance of water, the effect of reducing the thermal expansion of the substrate, and the electromagnetic-wave shielding effect, for example. If these effects are to be produced, the plating film preferably covers not less than 90 % of the area of the surface of the substrate, and more preferably covers not less than 95 %.

The plating film may include, for example, an electroless-plating film located directly on top of the substrate and an electroplating film located on top of the electroless-plating film. Although not limiting, the electroless-plating film may be, for example, an electroless copper plating film, an electroless nickel plating film, or an electroless nickel-phosphorus plating film, where an electroless nickel-phosphorus plating film is particularly preferable. Although not limiting, the electroplating film may be, for example, a copper electroplating film, a nickel electroplating film, or a chromium electroplating film.

The plating film may be a laminate of an electroless-plating film and a plurality of electroplating films. The plating film may include, for example, a structure with an electroless nickel-phosphorus plating film or an electroless nickel plating film, a copper electroplating film, and a nickel electroplating film, stacked in this order beginning on the substrate. In such implementations, the copper electroplating film mainly functions as an interference layer that absorbs stress, and the nickel electroplating film mainly functions as a hard layer that provides sufficient mechanical strength. To provide corrosion resistance and/or design quality, a chromium electroplating film may be further provided on the nickel electroplating film. Further, in implementations where a chromium electroplating film is provided on the nickel electroplating film, the nickel electroplating film may be produced by stacking a plurality of separate layers, e.g., a semi-gloss layer, a gloss layer and a microporous layer, on top of one another.

### [Method of Manufacturing Molded Part 10]

Next, a method of manufacturing the molded part 10 will be described. FIG. 2 is a schematic cross-sectional view of a construction of a mold 50, which is an exemplary mold used to manufacture the molded part 10. The mold 50 includes a fixed mold portion 511 and a movable mold portion 512, and includes, in its interior, a cavity 520, rib-forming portions 521 to 523, a sprue 531, and a gate 532, for example. The interface between the fixed and movable mold portions 511 and 512 is sealed by an O-ring 513.

The mold 50 also includes a gas passage 514 that allows gas for counter-pressure, discussed further below, to flow therethrough. The gas passage 514 is connected to a valve, not shown, and is constructed to introduce gas into the mold 50 or discharge gas from the mold 50 at a desired point of time.

The cavity 520 is a region between the fixed mold portion 511 and movable mold portion 512 that corresponds to the base 11 of the molded part 10 (FIG. 1). Similarly, the rib-forming portions 521 to 523 are regions between the fixed mold portion 511 and movable mold portion 512 that correspond to the ribs 121 to 123, respectively, of the molded part 10. It should be noted here that, although the term "cavity" is sometimes used to refer to a portion of the fixed mold portion, in the present specification it refers to a portion that corresponds to the base 11 of the molded part 10, as described above.

The sprue 531 is a portion through which molten resin is injected from an injection unit, not shown. The gate 532 is a portion that connects the sprue 531 and cavity 520.

FIGS. 3 to 5 schematically illustrate an implementation where injection molding is performed using the mold 50. First, before filling the mold 50 with molten resin, gas for counter-pressure is introduced into the mold. The counter-pressure gas used may be air, carbon dioxide, or nitrogen, for example. In implementations where a molded part with good appearance is to be produced using an amorphous resin such as PC or ABS, it is preferable to use carbon dioxide, whose effect of improving transferability of the mold surfaces is significant. In implementations where appearance quality requirements are not strict, it is preferable to use air for cost reasons. The pressure of the counter-pressure gas may be 1 to 5 MPa, for example.

After the mold 50 is filled with the counter-pressure gas, a molten resin R containing a blowing agent is injected into and fill the mold 50 (see FIG. 3). The blowing agent mixed with the molten resin R preferably uses physical foaming, which has a greater foaming power than chemical blowing. For example, MuCell (registered trademark), i.e., a supercritical foam-molding method, or the low-pressure foam-molding method described in JP 6139038 B1 may be used.

After the molten resin R containing a blowing agent has been injected to fill the mold, it is preferable to allow it to solidify while reducing foaming of the base 11 (FIG. 1) by the complete-filling method including pressure keeping, while reducing the pressure of the counter-pressure gas. The point of time at which the discharge of counter-pressure gas is initiated is preferably before completion of pressure keeping. If the point of time at which discharge of counter-pressure gas is initiated is later than completion of pressure keeping, counter-pressure gas creates a reaction force, making it difficult to fill the rib-forming portions 521 to 523 with molten resin R. The point of time at which discharge of counter-pressure gas is initiated is more preferably between several seconds before completion of primary filling (which varies depending on the shape of the molded part, e.g., five seconds before, and preferably one second before) and initiation of pressure keeping.

The rate of discharge of gas from the mold 50 and the rate of reduction of foam pressure in the mold vary depending on the distance from the gate 532; the larger the mold 50, the more variations occur in foaming conditions. In rib-forming portions located near the gate, pressure does not easily decrease due to pressure keeping and/or filling pressure, and foaming is less likely to occur than in rib-forming portions located far from the gate.

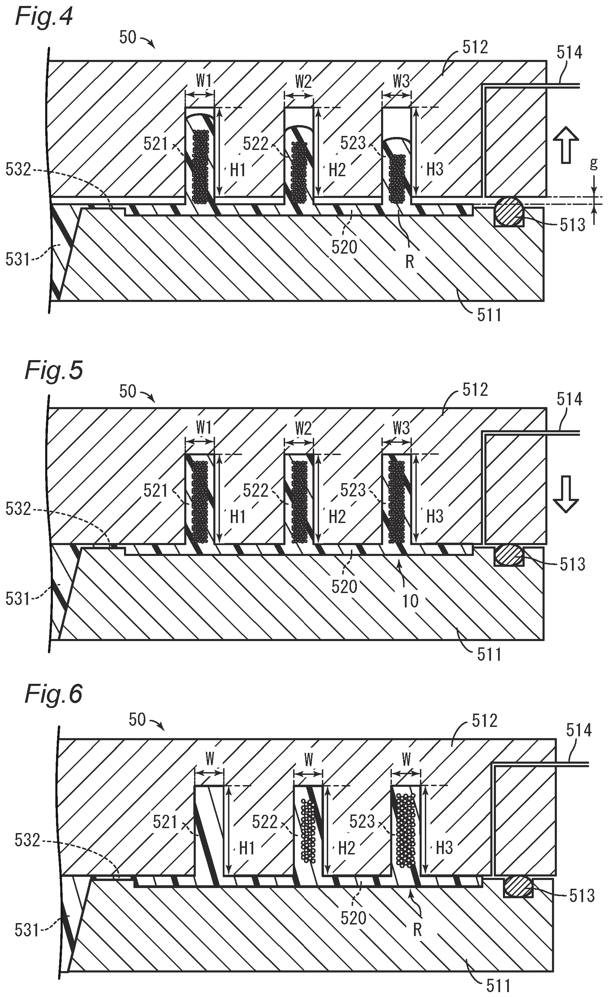

According to the present embodiment, after discharge of counter-pressure gas has been initiated, the movable mold portion 512 is moved by a distance g in a direction that increases the distance from the fixed mold portion 511 (see FIG. 4; this step will be hereinafter referred to as "core-back step"). This will rapidly reduce the pressure in the rib-forming portions 521 to 523, promoting foaming in the rib-forming portions 521 to 523. This will increase the proportion of foam cells in each of the ribs 121 to 123 (FIG. 1) and, at the same time, reduce variations in the proportion of foam cells among the ribs 121 to 123.

The distance *g* by which the movable mold portion 512 is moved is preferably 0.1 to 2.0 times the average thickness *t* of the base 11 (FIG. 1). If the distance *g* is too small, foaming in the rib-forming portions 521 to 523 will not be sufficiently promoted. On the other hand, if the distance *g* is too large, it may cause production of burr and/or deformation. A lower limit of the distance *g* is more preferably 0.2 times the average thickness *t* of the base 11. An upper limit of the distance *g* is more preferably 1.0 times the average thickness *t* of the base 11, and yet more preferably 0.5 times the average thickness *t*.

After the core-back step, the movable mold portion 512 is moved again in a direction that reduces the distance from the fixed mold portion 511 to correct the thickness of the base 11 (see FIG. 5; this step will be hereinafter referred to as "renewed clamping step"). Without this step, foam cells might be produced in the base 11. Further, the base 11 might develop deflection and/or undulation.

The above-described steps result in the molded part 10.

FIG. 6 is a schematic cross-sectional view illustrating how foaming occurs if the core-back step (FIG. 4) is not performed. As discussed above, rib-forming portions near the gate 532 experience higher filling pressures of the molten resin R such that foaming does not easily occur, leading to larger variations in the proportion of foam cells. On the other hand, according to the present embodiment, performing the core-back step (FIG. 4) and renewed clamping step (FIG. 5) will reduce variations in the proportion of foam cells.

A molded part 10 according to the first embodiment of the present invention as well as a method of manufacturing the same have been described. The present embodiment provides a molded part that is light-weight and, at the same time, provides improved strength and appearance.

### [Second Embodiment]

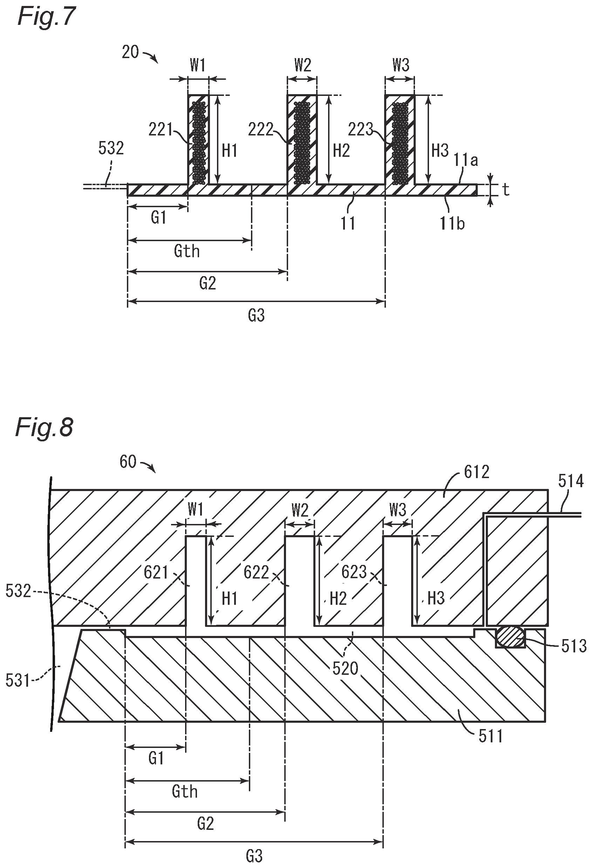

FIG. 7 is a schematic cross-sectional view of a construction of a molded part 20 according to a second embodiment of the present invention. The molded part 20 includes ribs 221 to 223 that replace the ribs 121 to 123 of the molded part 10 (FIG. 1).

The molded part 20 includes a plurality of ribs, where ribs separated from the gate 532 by distances smaller than a predetermined threshold *Gth* have root widths smaller than ribs separated from the gate 532 by distances larger than the threshold *Gth*.

The gate 532 is a portion that connects the portion through which molten resin is injected from the injection unit (i.e., sprue) and the molded part 20. In an end product, the resin filling the gate 532 has usually been removed; however, even if the resin filling the gate 532 has been removed, it is possible to determine the location of the gate 532 in many cases from the shape or surface conditions of the molded part 20, for example.

"Distance from the gate 532" means the distance from the interface between the gate 532 and base 11 to the side (i.e., side of the root) of the relevant rib closer to the gate 532, as measured along an in-plane direction of the base 11.

According to the present embodiment, *G1* < *Gth* < *G2* < *G3.* In other words, the distance *G1* of the rib 221 from the gate 532 is smaller than the threshold *Gth*, and the distances *G2* and *G3* of the ribs 222 and 223, respectively, from the gate 532 are larger than the threshold *Gth*. Thus, the width *W1* of the root of the rib 221 is smaller than the widths *W2* and *W3* of the roots of the ribs 222 and 223.

As discussed above, during injection molding, the closer to the gate 532, the higher the filling pressure; thus, foaming does not easily occur in ribs near the gate 532. As the width of the roots of ribs separated from the gate 532 by a distance smaller than a predetermined threshold *Gth* is relatively small, the rate at which molten resin flows into these ribs is lower, which promotes foaming, thereby reducing variations in the proportion of foam cells across the entire molded part 20.

How large the threshold *Gth* should be, by what amount the width of the roots of ribs separated from the gate 532 by a distance smaller than the threshold *Gth* should be reduced, and other factors vary depending on the shape of the molded part 10 and the type of the resin, and may be decided based on simulation, for example.

The threshold *Gth* may be, for example, in the range of 15 to 30 % of the distance from the gate 532 to the rib located farthest therefrom, Gmax (in the implementation of FIG. 7, distance *Gmax* = distance G3). The threshold *Gth* is preferably 20 to 25 % of the distance Gmax. Alternatively, the threshold *Gth* may be an absolute value, in the range of 10 to 30 mm. The threshold *Gth* is preferably 15 to 20 mm.

FIG. 8 is a schematic cross-sectional view of a construction of a mold 60, which is an exemplary mold used to manufacture the molded part 20. The mold 60 includes a movable mold portion 612 that replaces the movable mold portion 512 of the mold 50 (FIG. 2), and includes rib-forming portions 621 to 623 that replace the rib-forming portions 521 to 523, respectively, of the mold 50. The rib-forming portions 621 to 623 correspond to the ribs 221 to 223, respectively, of the molded part 20 (FIG. 7).

The mold 60 according to the present embodiment includes a plurality of rib-forming portions, where the width of the roots of rib-forming portions separated from the gate 532 by a distance smaller than a predetermined threshold *Gth* is smaller than the width of the roots of rib-forming portions separated from the gate 532 by a distance larger than the threshold *Gth*. In the implementation of FIG. 8, the width *W1* of the root of the rib-forming portion 621 is smaller than the widths *W2* and *W3* of the roots of the rib-forming portions 622 and 623. As the width of the roots of rib-forming portions separated from the gate 532 by a distance smaller than a predetermined threshold *Gth* is relatively small, foaming in these rib-forming portions will be promoted, thereby reducing variations in the proportion of foam cells across the entire molded part 20 (FIG. 7).

It will be understood that, in implementations where the mold 60 is used, the core-back step (FIG. 4) and renewed clamping step (FIG. 5) described in connection with the first embodiment may be performed or may not be performed.

A molded part 20 according to the second embodiment of the present invention as well as a method of manufacturing the same have been described. The present embodiment, too, provides a molded part that is light-weight and, at the same time, provides improved strength and appearance.

### [Third Embodiment]

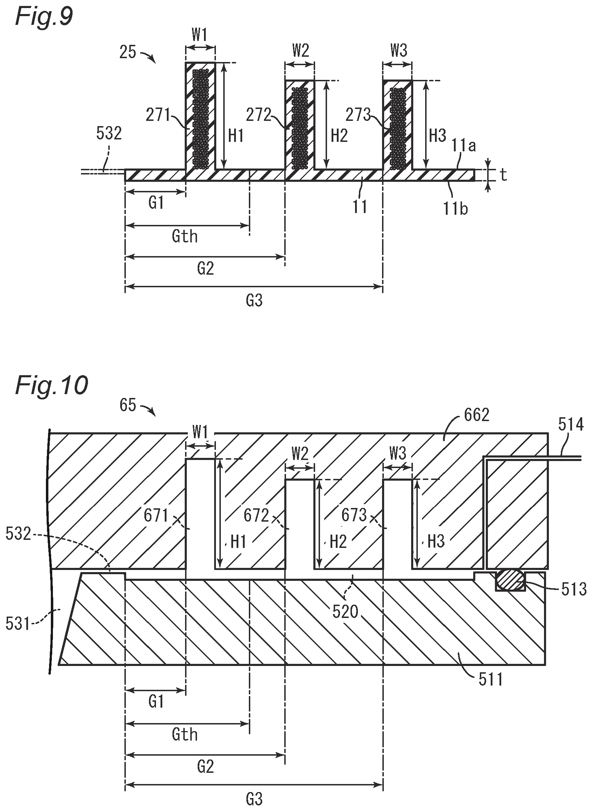

FIG. 9 is a schematic cross-sectional view of a construction of a molded part 25 according to a third embodiment of the present invention. The molded part 25 includes ribs 271 to 273 that replace the ribs 121 to 123 of the molded part 10 (FIG. 1).

The molded part 25 includes a plurality of ribs, where ribs separated from the gate 532 by a distance smaller than a predetermined threshold *Gth* have larger heights than ribs separated from the gate 532 by a distance larger than the threshold *Gth*. In the implementation of FIG. 9, the height *H1* of the rib 271 is larger than the heights *H2* and *H3* of the ribs 272 and 273.

FIG. 10 is a schematic cross-sectional view of a construction of a mold 65, which is an exemplary mold used to manufacture the molded part 25. The mold 65 includes a movable mold portion 662 that replaces the movable mold portion 512 of the mold 50 (FIG. 2), and includes rib-forming portions 671 to 673 that replace the rib-forming portions 521 to 523 of the mold 50. The rib-forming portions 671 to 673 correspond to the ribs 271 to 273, respectively, of the molded part 25 (FIG. 9).

The mold 65 includes a plurality of rib-forming portions, where rib-forming portions separated from the gate 532 by a distance smaller than a predetermined threshold *Gth* have larger heights than rib-forming portions separated from the gate 532 by a distance larger than the threshold *Gth*. In the implementation of FIG. 10, the height *H1* of the rib-forming portion 671 is larger than the heights *H2* and *H3* of the rib-forming portions 672 and 673. As the height of rib-forming portions separated from the gate 532 by a distance smaller than a predetermined threshold *Gth* is relatively large, the volume of these rib-forming portions is larger, which promotes foaming, thereby reducing variations in the proportion of foam cells across the entire molded part 25 (FIG. 9).

In implementations where the mold 65 is used, too, the core-back step (FIG. 4) and renewed clamping step (FIG. 5) described in connection with the first embodiment may be performed or may not be performed.

A molded part 25 according to the third embodiment of the present invention as well as a method of manufacturing the same have been described. The present embodiment, too, provides a molded part that is light-weight and, at the same time, provides improved strength and appearance.

### [Fourth Embodiment]

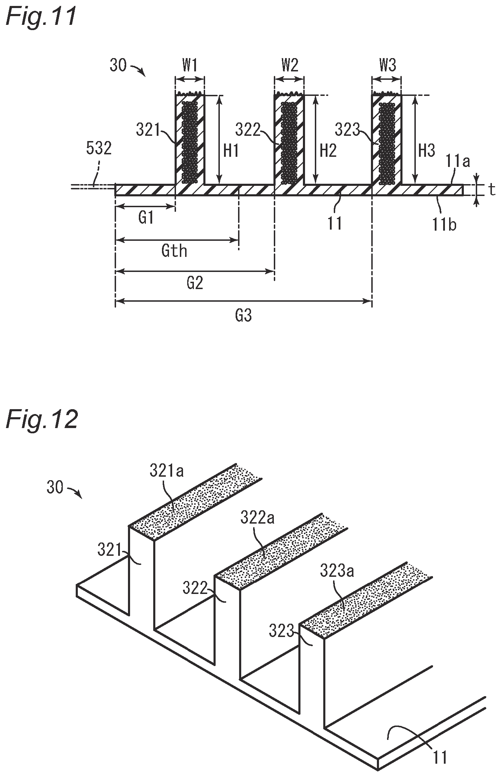

FIG. 11 is a schematic cross-sectional view of a construction of a molded part 30 according to a fourth embodiment of the present invention. FIG. 12 is a perspective view of the molded part 30. The molded part 30 includes ribs 321 to 323 that replace the ribs 121 to 123 of the molded part 10 (FIG. 1).

Each of the top end surfaces (i.e., end surfaces located farthest from the base 11) 321a to 323a of the ribs 321 to 323 are provided with a plurality of fine protrusions. Specifically, protrusions with a size represented by an equivalent circle diameter of 10 to 40 µm as projected on a plane perpendicular to the thickness direction of the base 11 are provided in a density of 100 projections / mm² or more.

### [Method 1 of Manufacturing Molded Part 30]

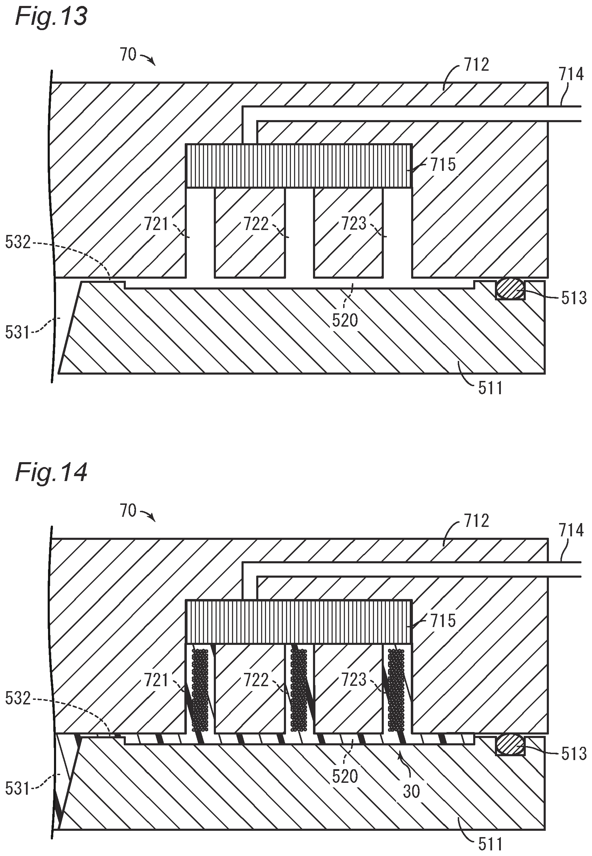

FIG. 13 is a schematic cross-sectional view of a construction of a mold 70, which is an exemplary mold used to manufacture the molded part 30. FIG. 14 schematically illustrates an implementation where injection molding is performed using the mold 70. The mold 70 includes a movable mold portion 712 that replaces the movable mold portion 512 of the mold 50 (FIG. 2), and includes rib-forming portions 721 to 723 that replace the rib-forming portions 521 to 523 of the mold 50. The rib-forming portions 721 to 723 correspond to the rib 321 to 323, respectively, of the molded part 30 (FIG. 11).

The mold 70 further includes a gas communication part 715 positioned in contact with the top ends of the rib-forming portions 521 to 523. The mold 70 further includes a gas passage 714 that replaces the gas passage 514 of the mold 50 (FIG. 2), positioned in contact with the gas communication part 715.

The gas communication part 715 is a part that allows gas to pass through between the rib-forming portions 721 to 723 and the gas passage 714 without allowing molten resin to pass through. Specifically, the gas communication part 715 includes fine through-holes extending through the gas communication part 715 in the vertical direction (i.e., direction parallel to the thickness direction of the base 11) in a number density of 100 through-holes / mm² or more.

The cross-sectional shape of the through-holes of the gas communication part 715 (i.e., shape of a cross section perpendicular to the thickness direction of the base 11) may be any shape, such as a circle, an ellipse or a rectangle. The size of each of the through-holes of the gas communication part 715, represented by an equivalent circle diameter projected on a plane perpendicular to the thickness direction of the base 11, is preferably 10 to 40 µm. If the through-holes are too small, the rate of pressure reduction in the rib-forming portions 721 to 723 may not be increased. If the through-holes are too large, molten resin may be sucked into the gas passage 714.

During discharge of counter-pressure gas, passing gas through the gas communication part 715 prior to discharge through the gas passage 714 will increase the rate of pressure reduction in the rib-forming portions 721 to 723, thus promoting foaming in the rib-forming portions 721 to 723 (see FIG. 14). This will further increase the proportion of foam cells in the ribs 321 to 323 of the molded part 30 (FIG. 11). Further, it will reduce variations in how easily foaming can occur depending on the distance from the gate 532. During this, the shapes of the through-holes of the gas communication part 715 are transferred onto the top end surfaces 321a to 323a (FIG. 12) of the ribs 321 to 323 of the molded part 30, forming the above-discussed fine protrusions.

In implementations where the mold 70 is used, too, the core-back step (FIG. 4) and renewed clamping step (FIG. 5) described in connection with the first embodiment may be performed or may not be performed.

Although in the above-described implementation the gas communication part 715 is positioned in contact with the top ends of all rib-forming portions 721 to 723, the gas communication part 715 may be positioned in contact with only the top ends of some of the rib-forming portions 721 to 723. For example, the gas communication part 715 may be positioned in contact with only the top end of the rib-forming portion 721, which is located close to the gate 532 and in which foaming does not easily occur. Also, in the molded part 30 (FIG. 11), only the top end surfaces of some of the ribs 321 to 323 may be provided with fine protrusions. Specifically, it is only required that the top end surfaces of at least some of the plurality of ribs be provided with protrusions with an equivalent circle diameter of 10 to 40 µm as projected on a plane perpendicular to the thickness direction of the base 11, in a number density of 100 projections / mm² or more.

### [Method 2 of Manufacturing Molded Part 30]

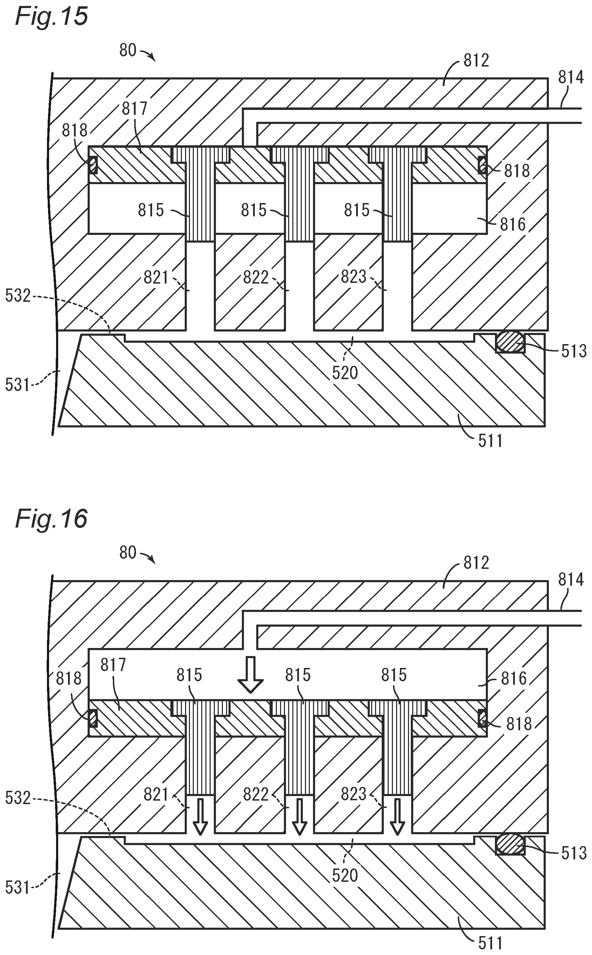

FIG. 15 is a schematic cross-sectional view of a construction of a mold 80, which is another exemplary mold used to manufacture the molded part 30. FIGS. 16 to 18 schematically illustrate an implementation where injection molding is performed using the mold 80. The mold 80 includes a movable mold portion 812 that replaces the movable mold portion 512 of the mold 50 (FIG. 2), and includes rib-forming portions 821 to 823 that replace the rib-forming portions 521 to 523 of the mold 50. The rib-forming portions 821 to 823 correspond to the ribs 321 to 323, respectively, of the molded part 30 (FIG. 11).

The mold 80 is constructed such that the volume of the rib-forming portions 821 to 823 is variable, as discussed further below.

The mold 80 includes a space 816 connected to the rib-forming portions 821 to 823. The mold 80 also includes a gas passage 814 that replaces the gas passage 514 of the mold 50 (FIG. 2), and the gas passage 814 is positioned so as to be a continuation of the space 816.

The mold 80 further includes a plate 817 positioned within the space 816. The peripheral surface of the plate 817 and the peripheral surface of the space 816 is sealed by an O-ring 818, for example. The space 816 is divided by the plate 817 into a region adjacent to the gas passage 814 and a region adjacent to the rib-forming portions 821 to 823. The plate 817 is constructed to be able to slide in the vertical direction (i.e., thickness direction of the base 11) while maintaining gas tightness between the region adjacent to the gas passage 814 and the region adjacent to the rib-forming portions 821 to 823.

A plurality of gas communication parts 815 are fixed to the plate 817. The plurality of gas communication parts 815 are constructed to move together with movement of the plate 817, and to fit into the rib-forming portions 821 to 823.

Each of the plurality of gas communication parts 815 is a part that allows gas to pass through between the region adjacent to the gas passage 814 and the region adjacent to the rib-forming portions 821 to 823 without allowing molten resin to pass. Similar to the gas communication part 715 of the mold 70 (FIG. 13), the gas communication parts 815 include fine through-holes extending through the gas communication parts 815 in the vertical direction (i.e., direction parallel to the thickness direction of the base 11) in a number density of 100 through-holes / mm² or more.

A method of manufacturing the molded part 30 using the mold 80 will now be described with reference to FIGS. 16 to 18. First, as shown in FIG. 16, counter-pressure gas is introduced through the gas passage 814. At this time, the differential pressure between the region adjacent to the gas passage 814 and the region adjacent to the rib-forming portions 821 to 823 causes the plate 817 to move toward the rib-forming portions 821 to 823. Together with movement of the plate 817, the gas communication parts 815 also move toward the rib-forming portions 821 to 823. This reduces the volume of the rib-forming portions 821 to 823.

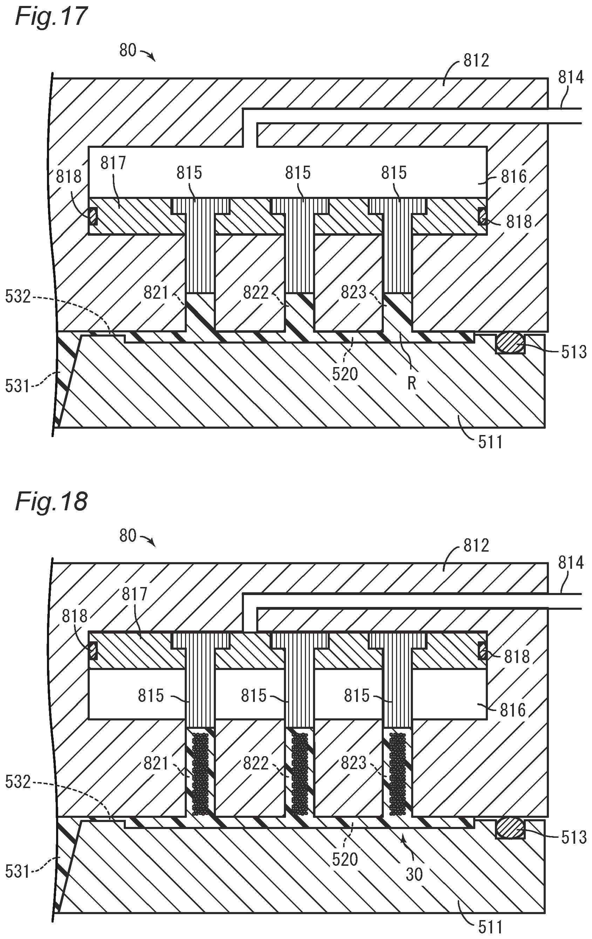

While a pressure of the counter-pressure gas is being kept, the mold is filled with molten resin containing blowing agent (see FIG. 17). After completion of primary filling (or several seconds before it), counter-pressure gas is discharged through the gas passage 814. This causes the plate 817 to move toward the gas passage 814 and, together with this, the gas communication parts 815 also move toward the gas passage 814 (see FIG. 18).

As the gas communication parts 815 move toward the gas passage 814, the volume of the rib-forming portions 821 to 823 increases, thus promoting foaming in the rib-forming portions 821 to 823. This will further increase the proportion of foam cells in the ribs 321 to 323 of the molded part 30 (FIG. 11). Further, it will reduce variations in how easily foaming can occur depending on the distance from the gate 532. During this, the shapes of the through-holes of the gas communication part 815 are transferred onto the top end surfaces 321a to 323a (FIG. 12) of the ribs 321 to 323 of the molded part 30, forming the above-discussed fine protrusions.

In implementations where the mold 80 is used, too, the core-back step (FIG. 4) and renewed clamping step (FIG. 5) described in connection with the first embodiment may be performed or may not be performed.

Although in the above-described implementation a plurality of gas communication parts 815 are connected by the plate 817, a seal mechanism may be provided for each of the plurality of gas communication parts 815 to be movable independently from one another. Further, instead of providing gas communication parts 815 for all rib-forming portions 821 to 823, gas communication parts 815 may only be provided for some of the rib-forming portions 821 to 823.

A molded part 30 according to the fourth embodiment of the present invention as well as a method of manufacturing the same have been described. The present embodiment provides a molded part that is light-weight and, at the same time, provides improved strength and appearance.

The molded parts according to the above-described embodiments include ribs constituted by foam moldings, thus enabling reduction of the amount of resin used. As a result, the molded parts according to the above-described embodiments will contribute to improving resource utilization efficiency, reducing transportation burdens, cutting energy consumption, and lowering CO₂ emissions. Offering the molded parts to the society will contribute to achieving some of the 17 Sustainable Development Goals (SDGs) established by the United Nations, namely, Goal 7: "affordable and clean energy"; Goal 9: "industry, innovation and infrastructure"; Goal 11: "sustainable cities and communities"; and Goal 12: "responsible consumption and production".

### EXAMPLES

The present invention will now be described more specifically by means of examples. The present invention is not limited to these examples.

### [Inventive Example 1]

A mold identical with the mold 50 described with reference to FIG. 2 was used to perform foaming injection molding. The cavity formed by the fixed and movable mold portions when closed had the shape of a plate of 100 mm by 100 mm, with a base of an average thickness *t* = 1.5 mm provided with three ribs of the same shape with a width *W* = 2.0 mm and a height *H* = 3.0 mm. The distance between the end of the gate and each of the ribs (see FIG. 7, for example) was as follows: *G1* = 15 mm, *G2* = 45 mm, and *G3* = 75 mm.

The resin used was a polycarbonate resin (1225Y from Teijin Limited). A MuCell (registered trademark) injection molding machine was used to introduce, into a molten resin at a resin temperature of 280 °C, nitrogen gas at a pressure of 20 MPa in 0.2 wt.% and mix them together.

Carbon dioxide, serving as counter-pressure gas, was introduced into the mold. The interior of the cavity was pressurized at a gas pressure of 4 MPa and, then, injection molding was performed for a filling time of 0.5 seconds. At the same time as primary filling of injection was completed, counter-pressure gas was discharged. At the same time, supplemental filling was performed with pressure keeping for two seconds at a kept pressure of 20 MPa.

As a result, if pressure discharge was performed while a kept pressure was being applied, no foaming occurred in the rib at a position of 15 mm away from the gate. When the kept pressure was released, foaming occurred also in that rib, but swirl marks remained on its surface. In view of this, after completion of pressure keeping, the mold was opened by 0.5 mm and forced pressure reduction was performed; thereafter, renewed clamping was performed to correct the thickness of the substrate. Specifically, pressure was reduced by the core-back step and, thereafter, to flatten the base that had developed deflection and/or undulation, a clamping force was applied for compression. Due to the compression, the base became non-foamed and foam only remained in the ribs.

For the molded part, SEM cross-section observation and image analysis were conducted to determine the proportion of foam cells in the base and the ribs. For a rib, three locations from the root to the tip were observed; for the base, the middle directly below a rib was observed. The results showed that the proportions of foam cells in the ribs, beginning with the rib close to the gate, were 2 %, 25 % and 35 % (i.e., the difference between the maximum and minimum values was 35 % - 2 % = 33 %), and no foam cells were observed in the base. No visually observable sink marks were present in the entire molded part. The flatness of the surface opposite to that with the ribs was measured using a microscope (VHX-6000 from Keyence Corporation), and the maximum depth from the reference surface, measured at the location on the opposite surface for each of the ribs, was 5 to 12 µm. The average diameter of foam cells of this molded part was 200 µm. Further, the surface of the base opposite to that with the ribs had a surface roughness *Ra* of 50 to 70 nm and was glossy.

In this example, the counter-pressure method, the core-back step and renewed clamping were performed to produce a part in which some portions, i.e., ribs, were foamed, where it was found that foaming was insufficient in ribs near the gate, decreasing the uniformity of the entire part. Still, sink marks were not easily produced near the gate, and shape precision was maintained. It is to be noted here that other investigations showed that foam control for ribs was particularly difficult in the distance range of 15 to 20 mm from the end of the gate.

### [Inventive Example 2]

A molded part was produced in the same manner as for Inventive Example 1 except that the width of the rib closest to the gate was 1.5 mm, i.e., smaller than the widths of the other ribs. However, the core-back step and renewed clamping, performed for Inventive Example 1, were not performed. The results showed that the proportions of foam cells in the ribs, beginning with the one close to the gate, were 10 %, 25 % and 35 % (i.e., difference between maximum and minimum = 35 % - 10 % = 25 %), which means that there were less variations in foaming than in Inventive Example 1. Also, no sink marks were produced. The flatness of the surface opposite to that with the ribs was 5 to 9 µm. The average diameter of foam cells was 200 µm, the same as for Inventive Example 1.

### [Inventive Example 3]

A molded part was produced in the same manner as for Inventive Example 1 except that the height of the rib closest to the gate was 4.0 mm, i.e., larger than those of the other ribs (the core-back step and renewed clamping were not performed). The results showed that the proportions of foam cells in the ribs, beginning with the one close to the gate, were 15 %, 25 % and 35 % (i.e., difference between maximum and minimum = 35 % - 15 % = 20 %), which means that there were less variations in foaming than for Inventive Example 1. Also, no sink marks were produced. The flatness of the surface opposite to that with the ribs was 5 to 8 µm. The average diameter of foam cells was 200 µm, i.e., the same as for Inventive Example 1.

### [Inventive Example 4]

Foaming injection molding was performed using a mold identical with the mold 70 including the gas communication part 715 described with reference to FIG. 13. Otherwise, a molded part was produced under the same conditions for Inventive Example 1 (the core-back step and renewed clamping were not performed). The results showed that the proportions of foam cells in the ribs, beginning with the one close to the gate, were 40 %, 45 % and 48 % (difference between maximum and minimum = 48 % - 40 % = 8 %), which means that there were less variations in foaming than for Inventive Example 1. No foam cells were observed in the base. No sink marks were produced, either. The flatness of the surface opposite to that with the ribs was 3 to 6 µm.

The average diameter of foam cells was 150 µm, i.e., smaller than for Inventive Example 1. The surface of the base opposite to that with the ribs had a surface roughness *Ra* of 50 to 70 nm, i.e., the same as for Inventive Example, and was glossy.

### [Inventive Example 5]

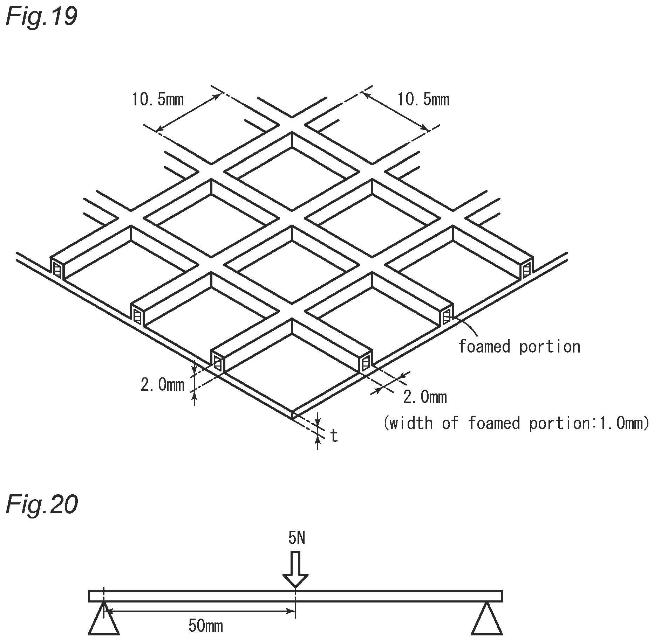

A mold including a gas communication part identical with that of Inventive Example 4 was used to produce a molded part including ribs with a height of 2.0 mm, as shown in FIG. 19. Different plates, one at a time, were used in the mold to produce molded parts with four different average base thicknesses t, namely, 0.8 mm, 1.0 mm, 1.2 mm and 1.5 mm. The same resin and molding method as for Inventive Example 1 were used, with only the amount of filling adjusted, to perform partial foam molding to produce a smooth surface (the core-back step and renewed clamping were not performed). For the moldings with thicknesses not larger than 1.0 mm, the mold temperature was increased by 20 °C to provide supplementary filling.

For all base thicknesses, the proportion of foam cells in the ribs was 50 to 60 %. The difference between the maximum and minimum values of the proportion of foam cells among the plurality of ribs was not larger than 10 %, and no sink marks were observed. The flatness of the surface opposite to that with the ribs was 2 to 10 µm. The average diameter of foam cells was 150 µm.

For comparison, a solid molded part (i.e., solid product) was produced without using blowing agent, with a base thickness of 1.5 mm and a rib height of 1.0 mm (a solid product with a rib height of 2.0 mm developed sink marks). A bending test as shown in FIG. 20 was conducted on these molded parts. The results are shown in Table 1, together with the differences in weight relative to the solid product.

### [Table 1]

**TABLE 1**

| | Rib-foamed products | | | | Solild product |
|---|---|---|---|---|---|
| Base thickness (mm) | 0.8 | 1.0 | 1.2 | 1.5 | 1.5 |
| Difference in weight relative to solid product (in %) | -35 | -22 | -8 | +25 | - |
| Amount of deformation (mm) | 7.8 | 6.2 | 5.4 | 4.0 | 6.8 |

Table 1 shows that the foamed products with the thicknesses of 1.0 mm and 1.2 mm had better light-weight properties and strengths than the solid product. Foamed ribs enable increasing the height of walls without significantly increasing the weight. It is assumed that further increasing the height of the ribs will enable producing light-weight parts with high strength and without sink marks.

### [Inventive Example 6]

A mold identical with the mold 80 having rib-forming portions with a variable volume, as described with reference to FIG. 15, was used to perform foaming injection molding. Otherwise, a molded part was produced under the same conditions as for Inventive Example 1 (the core-back step and renewed clamping were not performed). The results show that the height of the ribs was 3.5 mm, i.e., larger than that of Inventive Example 1 by 0.5 mm. The proportions of foam cells in the ribs, beginning with the one close to the gate, were 50 %, 52 % and 55 % (difference between maximum and minimum = 55 % - 50 % = 5 %), which means that there were less variations in foaming than for Inventive Example 1. No foam cells were observed in the base. No sink marks were produced, either. The flatness of the surface opposite to that with the ribs was 2 to 10 µm.

The average diameter of foam cells was 350 µm, i.e., larger than that for Inventive Example 1. The surface of the base opposite to that with the ribs had a surface roughness Ra of 50 to 70 nm and was glossy.

### [Inventive Example 7]

A mold having rib-forming portions with a variable volume identical with that of Inventive Example 6 was used to produce a molded part of crystalline resin. Specifically, a polypropylene resin with 17 wt.% talc mixed therein was used, with a resin temperature of 190 °C and a mold temperature of 40 °C, and the counter-pressure gas was changed to air and the pressure to 2 MPa. Otherwise, a molded part was produced under the same conditions as for Inventive Example 6. The results show that the height of the ribs was 7.0 mm, i.e., approximately 4.5 times the base thickness of 1.5 mm. The proportions of foam cells in the ribs, beginning with the one close to the gate, were 65 %, 70 % and 75 % (i.e., difference between maximum and minimum = 75 % - 65 % = 10 %). While the proportion of foam cells in the base as measured at the middle of a portion directly below a rib was about 1 %, no foam cells were observed in areas distant from the ribs. These results show that the use of a crystalline resin with high melt tension will enable forming ribs with high expansion ratio (i.e., with high proportion of foam cells).

The average diameter of foam cells was 600 µm, and was fibrilized. In the present inventive example, no significant rupture was observed; however, a too high an expansion ratio may cause fibrilization to progress and thus decrease the strength of the ribs.

No sink marks were produced. The flatness of the surface opposite to that with the ribs was 2 to 7 µm. In the present inventive example, no swirl marks were observed; however, the surface roughness Ra was about 0.7 µm, which means a deterioration of about 10 % compared with the solid product. This is presumably because a crystalline resin was used and thus the effects of counter-pressure were lower than for examples with amorphous resins. Nevertheless, the part possessed sufficient quality for use as an appearance part.

Although embodiments of the present invention have been described, the present invention is not limited to the above-described embodiments, and various modifications are possible within the scope of the invention.

### REFERENCE SIGNS LIST

10, 20, 25, 30: molded part
11: base
121-123, 221-223, 271-273, 321-323: ribs
50, 60, 65, 70, 80: mold
511: fixed mold portion
512, 612, 662, 712, 812: movable mold portion
513: O-ring
520: cavity
521-523, 621-623, 671-673, 721-723, 821-823: rib-forming portions
531: sprue
532: gate
514, 714, 814: gas passage
715, 815: gas communication part
816: space
817: plate
818: O-ring

## Claims

1. A molded part made from a thermoplastic resin, comprising:
a base with an average thickness t of 0.5 to 3.0 mm; and
a plurality of ribs protruding from one face of the base in a thickness direction of the base,
a flatness of a face of the base opposite to the face provided with the plurality of ribs being not more than 15 µm,
a width of a root of each of the plurality of ribs being 1.0 to 4.0 times the average thickness t of the base,
a proportion of foam cells in the base being 0 to 5 %,
a proportion of foam cells in each of the plurality of ribs being 0 to 90 %,
at least one of the plurality of ribs having foam cells,
a difference between a maximum value and a minimum value of the proportions of foam cells among the plurality of ribs being not more than 35 %.

2. The molded part according to claim 1, wherein, for each of the plurality of ribs, a height is 1.0 to 4.0 times the width of the root and is 2.0 to 10.0 mm.

3. The molded part according to claim 1, wherein the width of the root of one of the plurality of ribs that is separated from a gate by a distance smaller than a predetermined threshold is smaller than the width of the root of a rib separated from the gate by a distance larger than the threshold.

4. The molded part according to claim 1, wherein a height of one of the plurality of ribs that is separated from a gate by a distance smaller than a predetermined threshold is larger than a height of a rib separated from the gate by a distance larger than the threshold.

5. The molded part according to claim 1, wherein a surface roughness *Ra* of the face of the base opposite to the face provided with the plurality of ribs is 10 to 200 nm.

6. The molded part according to claim 1, wherein the thermoplastic resin is an amorphous resin.

7. The molded part according to claim 1, wherein the thermoplastic resin is a crystalline resin.

8. The molded part according to claim 1, wherein a top end surface of at least one of the plurality of ribs is provided with protrusions with an equivalent circle diameter of 10 to 40 µm as projected on a plane perpendicular to the thickness direction of the base in a number density of 100 projections / mm² or more.

9. The molded part according to claim 3 or 4, wherein the threshold is 10 to 30 mm.

10. The molded part according to claim 1, wherein an average diameter of foam cells in the plurality of ribs is not larger than 500 µm.

11. The molded part according to claim 1, further comprising a plating layer provided on a surface of the base and the ribs.

12. The molded part according to claim 11, further comprising a mixture layer at an interface between the base and the ribs, on the one hand, and the plating layer, on the other, the mixture layer being a region with the thermoplastic resin and metal of the plating layer mixed together.

13. A method of manufacturing the molded part according to any one of claims 1 to 8 and 10 to 12 using a mold including a fixed mold portion and a movable mold portion and including a cavity corresponding to the base and a plurality of rib-forming portions corresponding to the plurality of ribs, comprising:
introducing gas for counter-pressure into the mold;
injection-molding a molten resin containing a blowing agent into the mold;
initiating discharge of the gas for counter-pressure before completion of pressure keeping;
moving the movable mold portion in a direction for increasing a distance from the fixed mold portion; and,
after the movable mold portion has been moved in the direction for increasing the distance from the fixed mold portion, moving the movable mold portion in a direction for reducing the distance from the fixed mold portion.

14. A method of manufacturing the molded part according to any one of claims 3, 4 and 8 using a mold including a fixed mold portion and a movable mold portion and including a cavity corresponding to the base and a plurality of rib-forming portions corresponding to the plurality of ribs, comprising:
introducing gas for counter-pressure into the mold;
injection-molding a molten resin containing a blowing agent into the mold; and
initiating discharge of the gas for counter-pressure before completion of pressure keeping.

15. The method of manufacturing a molded part according to claim 14, wherein the mold includes a gas communication part positioned in contact with at least one of the plurality of rib-forming portions and adapted to pass the gas for counter-pressure without passing the molten resin.
